# EUROPÄISCHE PATENTSCHRIFT

(11) **EP 1 584 453 B1**
(45) Veröffentlichungstag und Bekanntmachung des Hinweises auf die Patenterteilung: **06.08.2008**
(21) Anmeldenummer: 05100823.3
(22) Anmeldetag: 07.02.2005
(51) Int. Cl.: B29D 30/66, B60C 11/00

(54) **Vorrichtung zum Bespiken von Reifenlaufstreifen**
Device for applying antiskid studs to a tyre tread
Dispositif pour appliquer des clous antidérapants sur la bande de roulement d'un pneu

(30) Priorität: 06.04.2004 DE 102004016751
(43) Veröffentlichungstag der Anmeldung: 12.10.2005
(73) Patentinhaber: Continental Aktiengesellschaft, 30165 Hannover (DE)
(72) Erfinder: Gonzalez Diez, Inocencio, 03029 Barcelona (ES); Schlittenhard, Jan, 30900 Wedemark (DE); Pohlmann, Robert, 34454 Bad Arolsen (DE); Dunger, Matthias, 08265 Erlbach (DE)

(56) Entgegenhaltungen:
- EP-A- 1 199 193
- DE-A1- 1 778 978
- US-A- 3 494 015
- US-A- 5 715 985

## Beschreibung

Die Erfindung betrifft eine Vorrichtung zum Bespiken von Reifenlaufstreifen mit Spikes mit nicht-zylindrischen, entlang einer Längsachse länglich bzw. oval ausgeführten Fußteilen, welche Vorrichtung eine Spikepistole aufweist, in welche die Spikes, Fußteile voran, mittels eines angesetzten Schlauches, Rohres oder dergleichen gelangen.

Die üblicher Weise zum Bespiken von Laufstreifen von Winterreifen eingesetzten Spikes weisen üblicherweise runde oder quadratische Fußteile, zylindrische Körperteile und ebenfalls zylindrische bzw. quadratische Pins auf. Herkömmliche Einrichtungen zum Bespiken umfassen meist einen Vorratsbehälter, aus welchem die Spikes durch Schüttelbewegungen in einen Schlauch, der direkt an die Spikepistole angeschlossen ist, transportiert werden. Eine Vorrichtung der eingangs genannten Art, die zum Einschießen von Spikes mit zylindrischen Fußteilen vorgesehen ist, mit der jedoch grundsätzlich auch Spikes mit länglichen oder ovalen ausgeführten Fußteilen einschiessbar sind, ist aus der DE-A-1 778 978 bekannt. Zu den Bestandteilen dieser Vorrichtung gehören eine Spikepistole, ein Sortierer und eine Vereinzelungseinrichtung, um die Spikes der Pistole durch einen Schlauch einzeln zuführen zu können. Es wurden nun bereits Spikes vorgeschlagen worden, die längliche, insbesondere ovale Fußteile aufweisen. Aus der EP-A-1 199 193 sind Spikes bekannt, die neben ovalen bzw. länglichen Fußteilen auch längliche Spikekörper und längliche Pins aufweisen, wobei der Splkefuß gegenüber dem Spikekörper bzw. dem Spikepin verschränkt angeordnet ist, sodass die Längsachse des Spikepins mit einer Längsachse des Spikefußes einen von 0° abweichenden Winkel einschließt. Dieser Winkel beträgt bevorzugt 90°. Vorteile dieser Spikes sind, dass ihre Verbiegung erheblich vermindert und das Kraftaufnahmevermögen vom Untergrund her verbessert werden können. Dabei werden solche Spikes in der Lauff4ächenmitte vor allem derart ausgerichtet, dass die Längsachse des ovalen Spikepins etwa der Axialen entspricht. So können in diesem Laufflächenbereich große Kräfte in Umfangsrichtung übertragen werden, was den Bremsweg verkürzt und die Traktion verbessert. Um ausreichend Querkräfte auch auf Eis übertragen zu können und ein gutes Geradeaus- und Kurvenfahrtvermögen zu gewährleisten, ist es von Vorteil, wenn die Spikes in den Reifenschulterbereichen derart eingebaut werden, dass die Spikepins unter einem Winkel von mindestens 30° zur Axialen verlaufen.

Mit den bekannten, herkömmlichen Vorrichtungen zum Bespiken von Reifen ist die gezielte und erwünschte Bespikung eines Reifens unter einem definierten Winkel gegenüber der Axialen oder der Umfangsrichtung nicht möglich.

Der Erfindung liegt somit die Aufgabe zu Grunde, eine Vorrichtung zum Bespiken von Reifen mit Spikes mit länglichen bzw. ovalen Fußteilen zu entwickeln.

Gelöst wird die gestellte Aufgabe erfindungsgemäß dadurch, dass eine Einrichtung zur übereinstimmenden Ausrichtung der Fußteile der Spikes vorgesehen ist, in welche die Spikes mit zufälliger Orientierung der Längsachse ihrer Fußteile eintreten und aus dieser bezüglich der Längsachse ihrer Fußteile übereinstimmend orientiert unmittelbar in den Schlauch, das Rohr oder dergleichen eintreten, welcher bzw. welches, ebenso wie die Transportwege der Spikes in der Spikepistole, einen gemäß dem Fußteil der Spikes länglichen bzw. ovalen Querschnitt aufweist bzw. aufweisen.

Vorteilhafte Weiterbildungen der Erfindung sind Gegenstand der abhängigen Ansprüche.

Erfindungsgemäß ausgeführte Vorrichtungen gestatten somit ein Bespiken von Laufstreifen mit Spikes mit länglich bzw. oval ausgeführten Fußteilen unter definierten und beliebig wählbaren Winkeln. Die erfindungsgemäße Vorrichtung erfordert nur geringe Anpassungsmaßnahmen an den Spikepistolen und deren Zuführungen. Es gibt eine Vielzahl einfacher, technisch vorteilhafter Mögüchkeiten, die Einrichtung, die eine Orientierung der Fußteile der Spikes bewirkt, auszuführen.

Von besonderem Vorteil ist es, wenn die Spikes in der Einrichtung Vibrationsbewegungen ausgesetzt werden, um derart den Transport der Spikes in der Einrichtung zu unterstützen oder zu bewirken. Dabei können diese Vibrationsbewegungen die Spikes in die oder aus der Einrichtung transportieren.

Der Transport aus der Einrichtung kann durch ein Einsaugen der Spikes in den Schlauch bzw. das Rohr unterstützt werden. Ein Einsaugen der Spikes ist dann leichter möglich, wenn der Schlauch, das Rohr oder dergleichen in oder quer zur Transportrichtung der Spikes angesetzt ist.

Die Einrichtung zur Ausrichtung der Spikes kann einem Vorratsbehälter unmittelbar oder unter Zwischenschaltung einer schlauch- oder rohrartigen Zuführung nachgeordnet sein. Der Vorratsbehälter ist dabei bevorzugt ein an sich bekannter Vibrations-Feeder, über welchen die Spikes der Einrichtung einzeln aber in Reihe zugeführt werden können.

Bei einer der möglichen Ausführungsvarianten der Erfindung werden die Spikes in der Einrichtung durch Vibrationen transportiert, wobei im Transportweg eine Vertiefung vorgesehen ist, deren seitliche Randbereiche Führungsleisten aufweist, in welche sich die Spikes mit ihren Fußteilen hängen, wobei eine Rampe die ausgerichteten Spikes von den Führungsleisten transportiert. Diese Einrichtung ist besonders einfach und zweckmäßig aufgebaut.

Bei einer weiteren, konstruktiv sehr einfachen Ausführung einer Einrichtung zur Ausrichtung der Spikes werden die Spikes ebenfalls unter kontrollierten Vibrationen transportiert, wobei im Transportweg eine Führung mit Führungsabsätzen vorgesehen ist, in welchen sich die Spikes mit ihren Fußteilen hängen, wobei der gegenseitige Abstand der Führungsabsätze über die Längserstreckung der Führung geringer wird, sodass die Vibrationsbewegungen während des Transportes der Spikes entlang der Führung eine Ausrichtung der Fußteile der Spikes bewirken.

Weitere besonders vorteilhafte Einrichtungen zur Ausrichtung der Spikes sehen vor, dass die Spikes, Fußteile voran, über einen Schlauch oder dergleichen der Einrichtung in zufälliger Orientierung ihrer Fußteile zugeführt werden.

Bei solchen Einrichtungen sind ein Einlasskanal mit einem eine beliebige Orientierung der Fußteile zulassenden Querschnitt und ein Auslasskanal mit einem den Fußteilen angepassten Querschnitt vorgesehen.

Bei besonders einfach ausführbaren Einrichtungen ist vorgesehen, dass der Einlasskanal mit dem Auslasskanal fluchtend angeordnet ist. Dabei kann zwischen dem Einlasskanal und dem Auslasskanal zumindest ein rotierendes oder zumindest ein hin und her bewegbares Element vorgesehen sein, welches eine Durchtrittsöffnung für den Spikefuß zur Verfügung stellt, die dem Querschnitt des Auslasskanals zumindest angenähert ist.

Bei einer weiteren besonders rationellen Einrichtung sind Einlass- und Auslasskanal gegeneinander versetzt und es ist ein Kolben vorgesehen, welcher die Spikes einzeln zur Eintrittsöffnung des Auslasskanals transportiert, vor welcher ein bewegliches, insbesondere rotierendes Element die Spikes ausrichtet.

Bei einer anderen Ausführungsform einer Einrichtung werden die zugeführten Spikes zwischen einem feststehenden zylindrischen Element und einem diese umgebenden rotierenden Element ausgerichtet.

Bei einer noch anderen Ausführungsvariante der Erfindung ist ein auf die Fußteile seitlich wirkender Stempel, welcher die zugeführten Spikes ausrichtet, vorgesehen. Die ausgerichteten Spikes können über den Stempel auf eine Führungsschiene transportiert werden.

Eine weitere Variante der erfindungsgemäßen Einrichtung, die auch mit Unterstützung von Vibrationsbewegungen arbeiten kann, weist einen seinen Querschnitt kontinuierlich ändernden Ausrichtungskanal auf, dessen Eintrittsöffnung den Eintritt von Spikes mit zufällig orientierten Fußteilen gestattet und dessen Austrittsöffnung einen den Fußteilen angepassten Querschnitt aufweist, wobei der Ausrichtungskanal vorzugsweise bogenförmig gekrümmt verläuft. Auch diese Ausführungsvariante zeichnet sich durch eine einfache, zweckmäßige sowie funktionssichere Konstruktion aus.

Weitere Merkmale, Vorteile und Einzelheiten der Erfindung werden nun anhand der Zeichnung, die schematische Darstellungen von Ausführungsbeispielen zeigt, näher beschrieben. Dabei zeigen
Fig. 1 eine Draufsicht und eine Seitenansicht eines Spikes,
Fig. 2 und Fig. 5 schematisch Bestandteile erfindungsgemäß ausgeführter Vorrichtungen,
Fig. 3a bis 3d, Fig. 4a bis 4e, Fig. 6a bis 6c, Fig. 7a bis 7c, Fig. 8a bis 8c, Fig. 9a bis 9e, Fig. 10a und 10b sowie Fig. 11a bis 11c in verschiedenen schematischen Ansichten und Schnittdarstellungen Ausführungsformen von Einrichtungen zur Ausrichtung der Fußteile von Spikes.

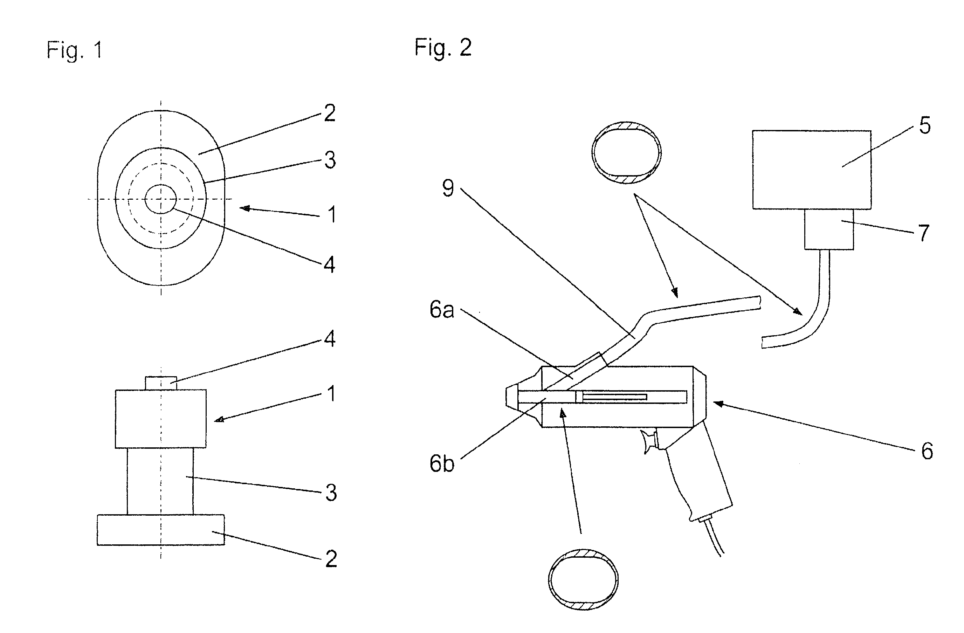

Fig. 1 zeigt eine bevorzugte Ausführungsform eines Spikes 1 mit einem abweichend von der sonst üblichen Kreisform ovalen Fußteil 2. Auf dem Fußteil 2 sitzt ein aus zwei zylindrischen Elementen bestehender Spikekörper 3, auf welchem ein mit einem kleineren Durchmesser versehener zylindrischer Pin 4 angeordnet ist.

Der Pin 4 kann anstelle der in Draufsicht kreisrunden Form auch eine ovale oder sonstige längliche Form aufweisen. Ebenso kann der Körper 3 abweichend von der dargestellten kreisrunden Form in Draufsicht länglich bzw. oval ausgeführt sein. Bei ovalem bzw. länglich ausgeführtem Pin wird der Spike bevorzugt gemäß der EP 1 199 193 A1 der Anmelderin ausgeführt, das heißt, die Längsachse des Spikefußes schließt mit der Längsachse des Spikepins einen von 0° abweichenden Winkel, insbesondere einen rechten Winkel, ein.

Spikes mit ovalen Fußteilen 2 werden beispielsweise in Bezug auf die Umfangsrichtung eines Reifens derart im Laufstreifen verankert, dass die Längserstreckung des Fußteiles der Umfangsrichtung entspricht. Eine derartige Einbauweise empfiehlt sich insbesondere im Mittelbereich einer Reifenlauffläche, da dadurch die Walkarbeit des an den Spike angrenzenden Gummis beim Abrollen des Reifens kleiner gehalten wird.

Zum Einbringen von Spikes 1 mit ovalen Fußteilen 2 in Laufstreifen wird eine erfindungsgemäß ausgeführte Vorrichtung, wie sie beispielsweise in Fig. 2 gezeigt ist, verwendet. Diese umfasst einen Vorratsbehälter 5, eine Spikeorientierungseinrichtung 7 und eine Spikepistole 6. Wie Fig. 2 schematisch zeigt weist die Spikepistole 6 ein Laderohr 6a und einen Schusskanal 6b auf, welche bei der dargestellten Ausführung jeweils einen ovalen Querschnitt, angepasst an eine ovale Form der Fußteile 2, aufweisen. An das ovale Laderohr 6a ist ein im Querschnitt ovaler Zuführschlauch 9 angeschlossen. Gemäß der Erfindung werden die Spikes 1 in den Schlauch 9, durch die Einrichtung 7 entsprechend ausgerichtet, eingeschleust. Der Vorratsbehälter 5 kann ein in bekannter Weise ausgeführter Vibrations-Feeder sein, über welchen die Spikes 1 der Einrichtung 7 einzeln zugeführt werden.

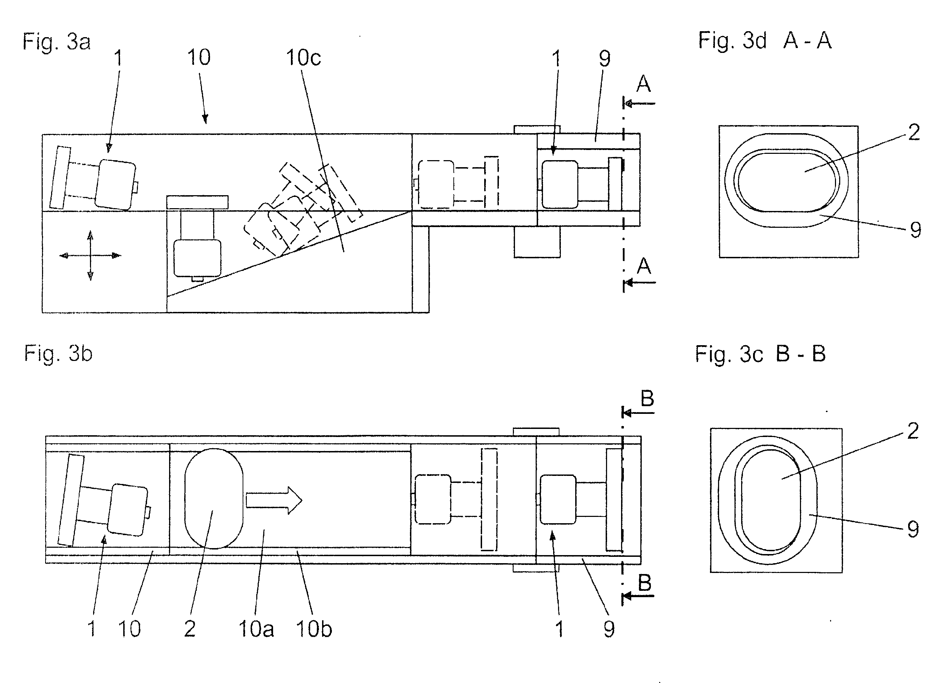

Bei der in Fig. 3a bis 3d gezeigten Ausführung werden die Spikes 1 in den ovalen Schlauch 9 eingesaugt. Wie Fig. 3a und 3b, Fig. 3a in Seitenansicht, Fig. 3b in Draufsicht, zeigen, werden die Spikes 1 vom Vorratsbehälter, der hier nicht dargestellt ist, durch über einen Motor oder dergleichen ausgeführte Vibrationen in eine nutförmige Führung 10 geleitet. Durch die Vibrationen (siehe Pfeilkreuz in Fig. 3a) sind die Spikes 1 derart gekippt, dass sie mit ihren längeren Fußteilseiten am Boden der Führung 10, deren Breite der Längsseite der Fußteile 2 etwa entspricht, liegen. Um sämtliche Spikes 1 mit den Fußteilen 2 voran auszurichten, ist eine Vertiefung 10a mit Führungsleisten 10b an ihren oberen Randbereichen vorgesehen. Die in die Vertiefung 10a fallenden Spikes 1 hängen sich mit ihren Fußteilen 2 auf die Führungsleisten 10b und werden über eine ansteigende Rampe 10c mit den Fußteilen 2 voran aus der Vertiefung 10a transportiert. Von einem kurzen Führungsstück werden die Spikes 1 in das hier angesetzte Ende des Schlauches 9 gesaugt und der nicht gargestellten Pistole zugeführt. Die Figuren 3c und 3d zeigen Schnitte durch den Schlauch 9 unmittelbar nach dem Eintritt eines Spikes 1.

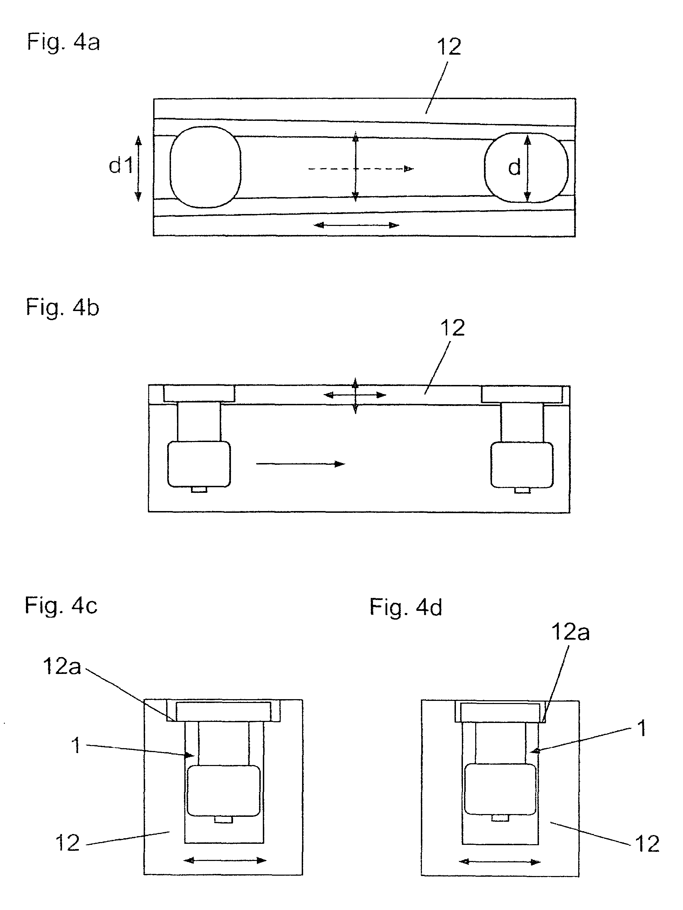

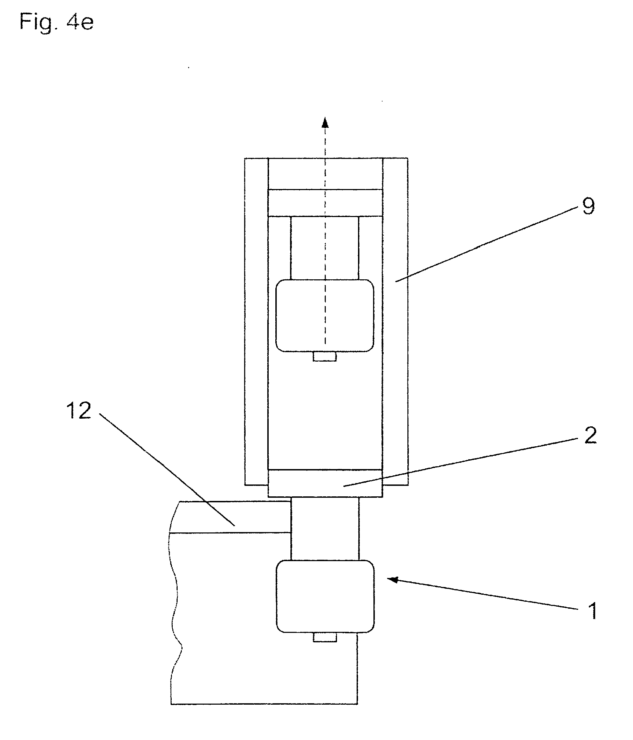

Fig. 4a bis 4e zeigen schematisch eine weitere Ausführungsform, bei welcher die Spikes 1 durch Vibrationsbewegungen transportiert werden. Für die Erfindung wesentlich ist bei dieser Ausführungsform eine dem in Fig. 4a bis 4c nicht gezeigten Schlauch 9 unmittelbar vorgelagerte Führung 12 für die Spikes 1. Fig. 4a zeigt eine Draufsicht der Führung 12, Fig. 4b eine seitliche Ansicht, Fig. 4c und 4d zeigen Stirnansichten der beiden Endbereiche der Führung 12. Wie Fig. 4e verdeutlicht, ist der Schlauch 9 an dem in Fig. 4a und 4b rechts befindlichen Endbereich senkrecht zur Erstreckung der Führung 12 angesetzt, sodass die Spikes 1 von der Führung 12 in den Schlauch 9 nach oben eingesaugt werden können. Durch kontrolliert ausgeführte und in entsprechender Weise in sämtliche Richtungen wirkende Vibrations- bzw. Rüttelbewegungen (siehe sämtliche Doppelpfeile in Fig. 4a bis 4d) treten die einzelnen Spikes 1 in die Führung 12 mit einer zufälligen Orientierung ihrer ovalen Fußteile 2 ein, indem sie sich mit ihren Fußteilen 2 auf seitlichen, in der Längsrichtung der Führung 12 verlaufenden und als Schienen wirkenden Führungsabsätzen 12a aufhängen. Fig. 4c zeigt einen am Anfang der Führung 12 befindlichen Spike 1. Nachdem der Abstand d₁ kleiner ist als der kleinste Durchmesser d der Fußteile 2 der Spikes 1 können die Spikes 1 selbst bei beliebiger Orientierung der Fußteile 2 nicht von den Führungsabsätzen 12a fallen. Wie Fig. 4a bis 4d zeigen, verringert sich der gegenseitige Abstand der beiden Führungsabsätze 12a in Richtung des Ansatzes des Schlauches 9 (siehe Fig. 4e) und es wird auch die Breite der Führungsabsätze 12a geringer. Durch die Vibrations- bzw. Schüttelbewegungen werden daher die entlang der Führung 12 transportierten Spikes 1 gezwungen, sich derart zu orientieren, dass ihre ovalen Fußteile 2 in Transportrichtung weisen.

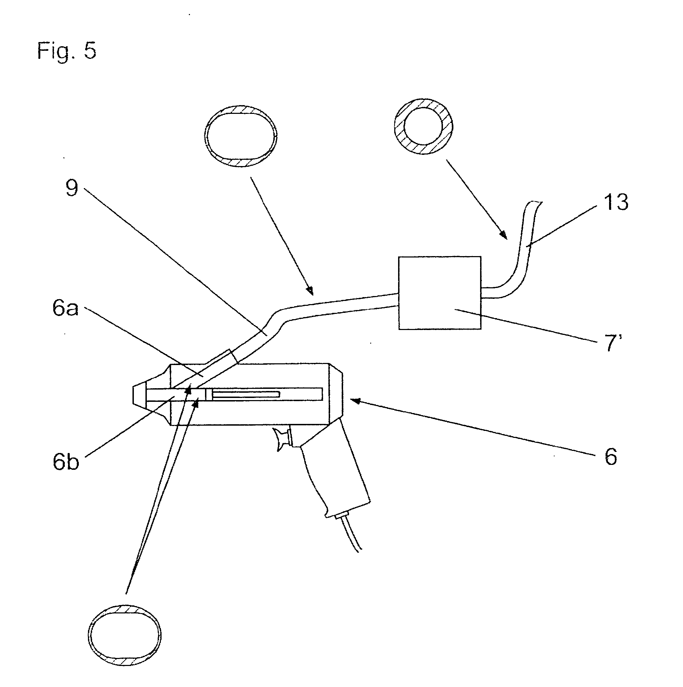

Bei einer anderen Gruppe von Ausführungsvarianten der Erfindung sind Einrichtungen 7' zur Spikeausrichtung vorgesehen. Wie Fig. 5 zeigt werden die Spikes der Einrichtung 7' nacheinander über einen Schlauch 13 mit rundem Querschnitt zugeführt und verlassen nach Ausrichtung die Einrichtung 7' über den Schlauch 9 mit ovalem Querschnitt. In den Schlauch 13 mit rundem Querschnitt können die Spikes über einen herkömmlich ausgeführten Vorratsbehälter (Vibrations-Feeder) eingespeist werden.

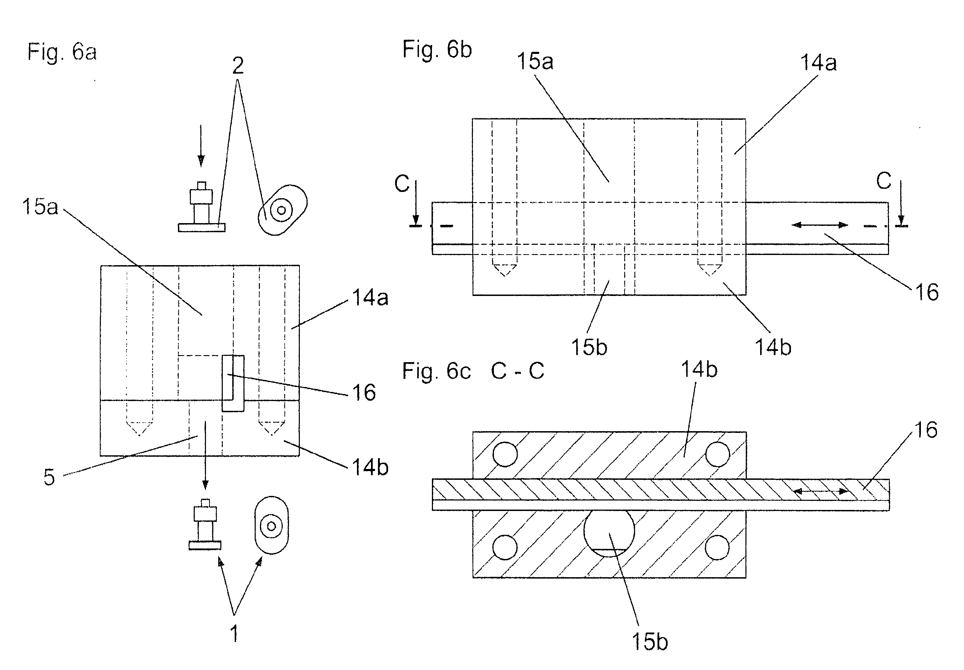

Fig. 6a bis 6c zeigen eine mögliche Ausführungsform einer Einrichtung 7' zur Ausrichtung von Spikes, Fig. 6a und 6b in zueinander senkrechten Ebenen senkrechte Schnitte und Fig. 6c eine horizontale Schnittdarstellung entlang der Linie C-C der Fig. 6b. Die Einrichtung besteht aus einem oberen Gehäuseteil 14a und einem unteren Gehäuseteil 14b, die miteinander verschraubt sind. Im oberen Gehäuseteil 14a ist ein mit einem kreisrunden Querschnitt versehener Einlasskanal 15a vorgesehen, an welchem der Schlauch 13 mit rundem Querschnitt angeschlossen ist. Mit dem Einlasskanal 15a fluchtet ein im unteren Gehäuseteil 14b vorgesehener Auslasskanal 15b mit einem ovalen, dem Fußteil 2 der Spikes 1 angepassten Querschnitt. Unmittelbar oberhalb des Auslasskanals 15b ist im oberen Gehäuseteil 14a ein im Querschnitt beispielsweise rechteckförmiger Schieber 16 quer zur Erstreckungsrichtung der Kanäle 15a, 15b in Richtung des Doppelpfeils in Fig. 6b und 6c verschiebbar gelagert. Der Schieber 16 verengt den Querschnitt des Einlasskanals 15a, sodass ein Durchtritt nur mit einer bestimmten Orientierung des Fußteiles 2, abgestimmt auf die Orientierung des Auslasskanals 15b, möglich ist. Der Schieber 16 wird über einen nicht dargestellten motorischen Antrieb in eine schnelle Hin- und Herbewegung versetzt. Wie Fig. 6a anhand eines einzelnen Spikes 1 zeigt, tritt dieser Fußteil 2 voran durch den hier nicht dargestellten Schlauch in den Einlasskanal 15a. Durch den sich schnell hin und her bewegenden Schieber 16 erfolgt eine Drehung der Spikes 1. Sobald dieser derart orientiert ist, dass die Erstreckung seines Fußteiles 2 der Erstreckung des Querschnittes des Auslasskanals 15b entspricht, fällt der Spike 1, gegebenenfalls unterstützt durch Luftdruck, in den Kanal 15b und kann über den nicht dargestellten Schlauch 9 zur Pistole transportiert werden.

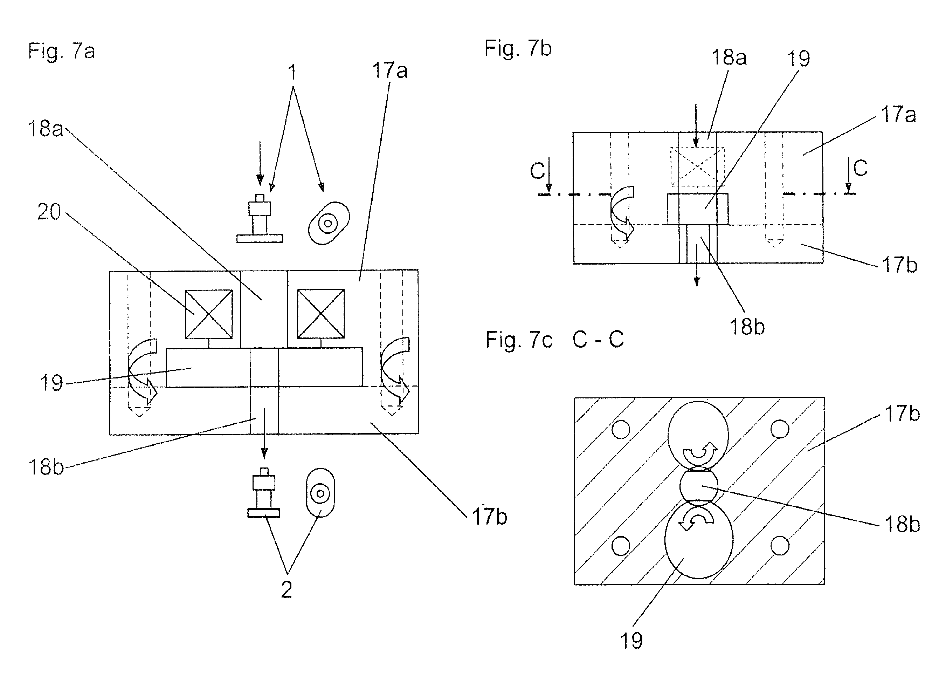

Fig. 7a bis 7c zeigen Darstellungen bzw. Ansichten einer anderen Ausführungsvariante einer Einrichtung zur Ausrichtung von Spikes. Dabei zeigen Fig. 7a und 7b vertikale Schnitte durch die Einrichtung und Fig. 7c einen Schnitt durch die Einrichtung entlang der Linie C-C der Fig. 7b und somit in horizontaler Richtung. Es sind zwei miteinander verbindbare, insbesondere verschraubbare, Gehäuseteile 17a, 17b vorgesehen, wobei das obere einen Einlasskanal 18a mit kreisförmigem Querschnitt und das untere einen Auslasskanal 18b mit ovalem Querschnitt aufweist, welche Kanäle 18a, 18b miteinander fluchtend angeordnet sind. Im Gehäuseteil 17a sind unmittelbar oberhalb des Auslasskanals 18b zwei Rollen 19 aus einem elastischen Material, beispielsweise aus Gummi, drehbar gelagert, welche über angedeutete Motoren 20 in Rotation versetzbar sind, wobei die Rotationsrichtungen (siehe Pfeile in Fig. 7a, 7b, 7c) der beiden Rollen 19 übereinstimmen. Durch die Anordnung der Rollen 19 wird der Durchtrittsquerschnitt des Einlasskanals 18a an den Querschnitt des Auslasskanals 18b angepasst. Wie Fig. 7a anhand eines einzelnen Spikes 1 zeigt, tritt dieser mit zufälliger Orientierung seines Fußteiles 2, Fußteil 2 voran, über den hier nicht gezeigten Schlauch 13 in den Einlasskanal 16a ein. Die rotierenden Rollen 19 erfassen den Spike 1 am Fußteil 2 und verdrehen ihn solange, bis er schließlich zwischen den Rollen 19 in den Auslasskanal 18b eintreten kann. Vom Auslasskanal 18b erfolgt ein Weitertransport der Spikes 1 zur nicht dargestellten Pistole über den am Kanal 18b angesetzten, nicht gezeigten Schlauch 9.

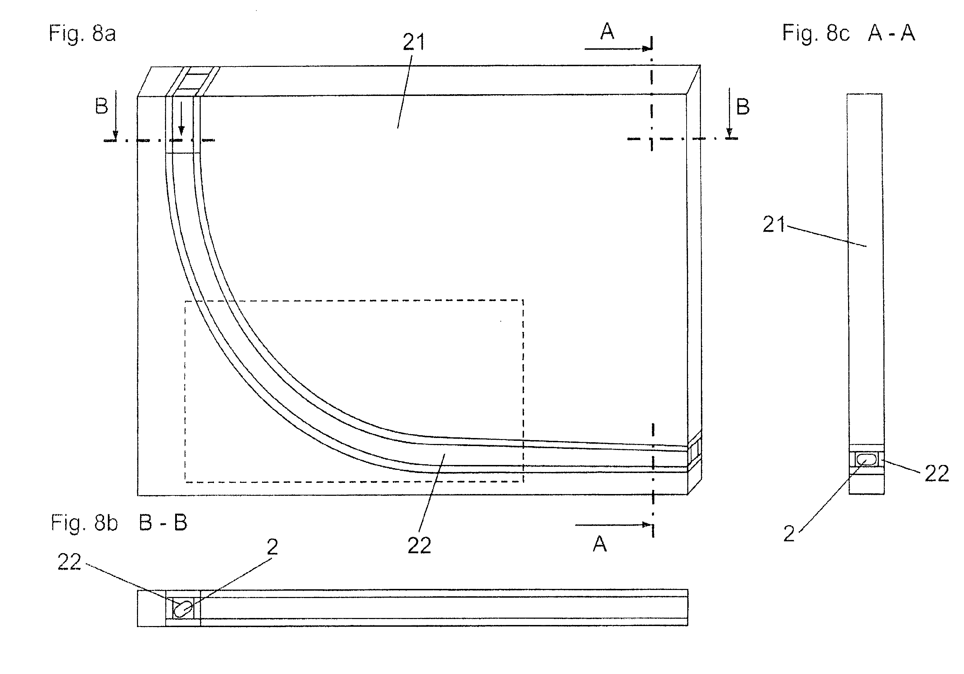

Bei der in Fig. 8a bis 8c gezeigten Ausführungsform besteht die Einrichtung zur Ausrichtung der Spikes 1 aus einem beispielsweise plattenförmigen Gehäuse 21, welches auf nicht gezeigte Weise aus zwei zusammengesetzten Teilen bestehen kann. Im Gehäuse 21 verläuft ein Ausrichtungskanal 22, in welchem die Spikes 1 durch eine kontinuierliche Krümmung des Kanalverlaufes um etwa 90° umgelenkt werden. Die Spikes 1 treten vorzugsweise in senkrechter Richtung an der einen Stirnseite des Gehäuses 21 ein. Hier weist der Kanal 22 einen Querschnitt auf, welcher einen Eintritt von Spikes 1 mit beliebiger Orientierung ihrer Fußteile 2 gestattet. Dies zeigt Fig. 8b anhand eines quadratischen Querschnittes. Im Bereich der Einlassöffnung ist auf nicht dargestellte Weise der vom Vorratsbehälter kommende Schlauch 13 angesetzt, im Bereich der Auslassöffnung der nicht gezeigte Schlauch 9, welcher die Spikes 1 zur Pistole weitertransportiert. Der Kanal 22 verändert entlang seines Verlaufes durch das Gehäuse 21 seinen Querschnitt kontinuierlich derart, dass im Bereich der Auslassöffnung der Querschnitt dem Oval der Fußteile 2 der Spikes 1 angepasst ist, vorzugsweise rechteckförmig ist.

Fig. 8c zeigt einen Schnitt des Gehäuses 21 im Bereich der Auslassöffnung und einen Fußteil 2 eines Spikes 1. Innerhalb des Ausrichtungskanals 22 erfolgt daher eine Drehung der Spikes 1 und eine selbsttätige Anpassung seiner Orientierung an den sich ändernden Querschnitt des Ausrichtungskanals 22. Die Ausrichtung kann durch eine Vibrationsbewegung des Gehäuses 21 unterstützt werden.

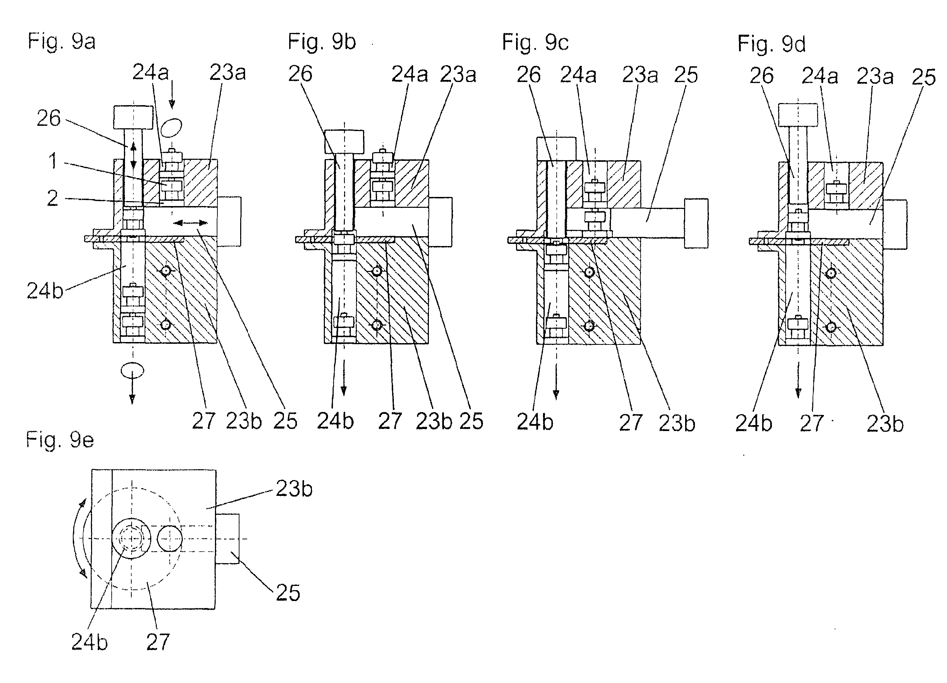

Fig. 9a bis 9d zeigen Vertikalschnitte durch eine weitere Ausführungsform einer Einrichtung zur Ausrichtung von Spikes in unterschiedlichen Stadien der Betätigung. Fig. 9e zeigt eine Unteransicht der Einrichtung. Die gezeigte Ausführung weist zwei Gehäuseteile 23a, 23b auf, die auf nicht dargestellte Weise miteinander verbunden sind. Im oberen Gehäuseteil 23a ist ein Einlasskanal 24a vorgesehen, welcher einen kreisrunden Querschnitt aufweist und an welchem der nicht dargestellte Schlauch 13 angesetzt ist. Die mit den Fußteilen 2 voran senkrecht in den Einlasskanal 24a eintretenden Spikes 1 weisen eine zufällige Orientierung auf. Im oberen Gehäuseteil 23a ist ein Transportkolben 25 in horizontaler Richtung entlang des Doppelpfeils in Fig. 9a bewegbar gelagert, welcher in der in Fig. 9a, 9b und 9d gezeigten Lage einen Weitertransport der in den Einlasskanal 24a eingetretenden Spikes 1 verhindert. Im oberen Gehäuseteil 23a ist parallel zum Einlasskanal 24a ein Stempel 26 in senkrechter Richtung beweglich gelagert. Der untere Bereich der Bohrung, in welcher der Stempel 26 bewegbar ist, bildet bei angehobenen Stempel 26 eine Aufnahme für den noch nicht orientierten Spike 1. Die Bohrung für den Stempel 26 fluchtet mit der ovalen bzw. länglichen Öffnung des im unteren Gehäuseteils 23b vorgesehenen Auslasskanals 24b. Unterhalb des Transportkolbens 24 ist zwischen den beiden Gehäuseteilen 23a, 23b eine Aufnahmestelle für eine rotierbare Scheibe 27 gebildet, deren mittige Öffnung der Bohrung für den Stempel 26 entspricht und mit dieser fluchtet. Die mittige Öffnung in der Scheibe 23 umläuft daher auch die ovale Öffnung des Auslasskanals 24b, dessen Querschnitt mit dem Oval der Fußteile 2 der Spikes 1 korrespondiert. Die vom Transportkolben 25, dem Stempel 26 und der Scheibe 27 durchgeführten Bewegungen sind aufeinander abgestimmt und können über nicht dargestellte automatische Antriebe erfolgen.

Anhand der Fig. 9a bis 9d wird nun die Funktion dieser Ausführungsform beschrieben. Die Spikes 1 treten in den Einlasskanal 24a ein, wobei der Kolben 25 vorerst einen Weitertransport verhindert. Wird der Kolben 25 zurück (nach rechts) bewegt, kann der Spike 1 in eine Position vor den Kolben 25 gelangen und wird von diesem bei seiner Vorwärtsbewegung (nach links) erfasst und in die Aufnahme unterhalb des in seiner oberen Position befindlichen Stempels 26 transportiert. Hier kommt der Spike 1 mit seinem Fußteil 2 auf die rotierende Scheibe 27, durch welche der Spike 1 verdreht wird. Wenn das Oval seines Fußteils 2 mit dem Oval des Auslasskanals 24b übereinstimmt tritt der Spike 1 in den Auslasskanal 24b, wobei der Stempel 26 einen gewissen Druck auf den Spike 1 von oben ausübt. Diese Lage zeigt Fig. 9b. Nun gibt der Kolben 25 den Weg für den nächsten im Einlasskanal 24a wartenden Spike 1 frei, dieser wird durch den Kolben 25 in die Aufnahme unterhalb des wieder hochgezogenen Stempels 26 transportiert. Fig. 9c und 9d zeigen diese beiden Schritte. Wie bereits bei den anderen Ausführungsbeispielen erwähnt, setzt auch hier am Auslasskanal 24b der Schlauch 9 zur Pistole an.

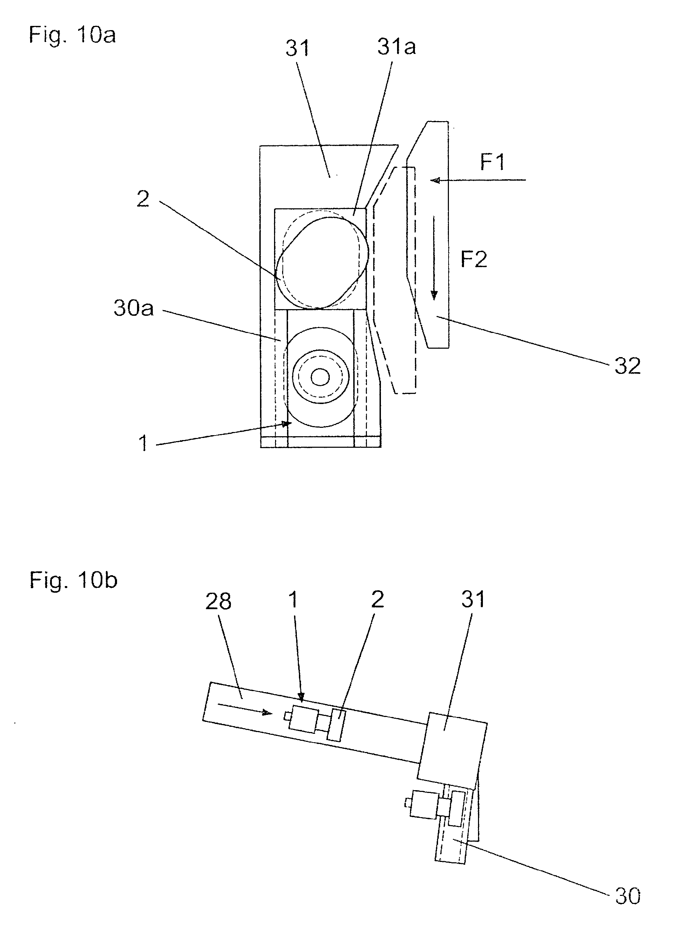

Bei der in Fig. 10a und 10b gezeigten Ausführungsform einer Einrichtung zur Ausrichtung von Spikes 1 werden die Spikes 1 mittels eines auf ihren Fußteil 2 seitlich einwirkenden Stempels 32 ausgerichtet. Fig. 10b zeigt eine prinzipielle Ansicht der Einrichtung, Fig. 10a das Grundprinzip der Ausrichtung. Die Einrichtung verfügt über einen Einlasskanal 28 mit kreisrundem Querschnitt, in welchen die Spikes 1, Fußteile 2 voran, in zufälliger Orientierung über den vom Vorratsbehälter kommenden Schlauch 13 mit kreisrundem Querschnitt eintreten. Die ausgerichteten Spikes 1 verlassen die Einrichtung auf einer schienenartigen Führung 30. Die Einrichtung weist ein Gehäuse 31 auf, in welchem eine Aufnahme 31a vorgesehen ist, welche einen Spike 1 mit beliebiger Orientierung seines Fußteiles 2 aufnehmen kann. Eine Seite dieser im Querschnitt beispielsweise rechteckförmigen Aufnahme 31a ist offen, sodass an der offenen Seite der Stempel 32 an den Fußteil 2 derart herangeführt werden kann, dass durch eine kombinierten Bewegung in Richtung der Pfeile F1 und F2 in Fig. 10a der Spike 1 derart ausgerichtet wird, dass sein Fußteil 2 in eine bestimmte Richtung orientiert ist. Gleichzeitig schiebt der Stempel 32 den Spike 1 in die schienenartige Führung 30. Anstelle eines Stempels 32 können eine oder mehrere rotierende Scheibe(n) oder dergleichen vorgesehen werden. Die schienenartige Führung 30 ist mit Führungsleisten 30a versehen, welche die Fußteile 2 der ausgerichteten Spikes 1 übergreifen, sodass die Spikes 1 nicht aus der Führung 30 fallen können. An die Führung 30 ist auf entsprechende Weise der Schlauch 9 zum Transportieren der Spikes 1 zur Pistole angeschlossen.

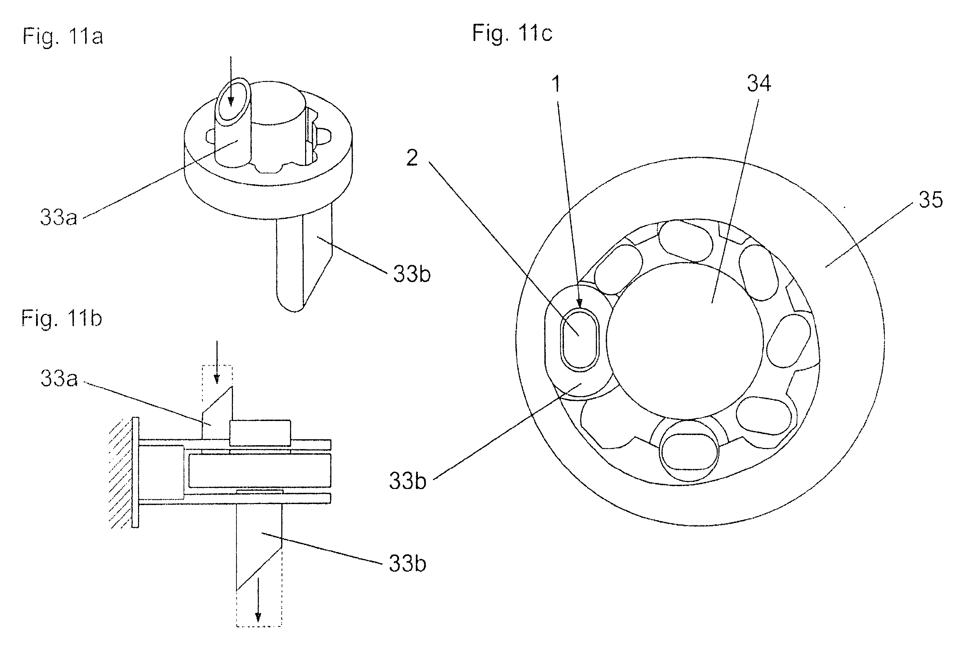

Bei der Ausführungsform gemäß Fig. 11a bis 11c weist die Einrichtung zur Ausrichtung von Spikes 1 einen Einlasskanal 33a mit kreisrundem Querschnitt und einen Auslasskanal 33b mit ovalem Querschnitt auf. Über den Einlasskanal 33a gelangen die mit zufälliger Orientierung, Fußteile 2 voran, zugeführte Spikes 1 in eine Aufnahmestelle zwischen ein feststehendes zylindrischen Element 34, beispielsweise aus Gummi, und einem dieses umgebenden rotierenden Element 35, welches derart um das Element 34 exzentrisch rotiert, dass im Zwischenraum zwischen dem rotierenden Element 35 und dem Element 34 die erwünschte Ausrichtung der Fußteile 2 erfolgt. Der ausgerichtete Spike 1 kann schließlich die Einrichtung über den Auslasskanal 32b verlassen.

Die Erfindung ist auf die dargestellten Ausführungsformen nicht eingeschränkt. Sämtliche Ausführungsformen können unter Vornahme der erforderlichen Anpassungen zur Ausrichtung von Spikes mit nahezu beliebigen nicht-zylindrischen Fußteilen verwendet werden.

## Patentansprüche

1. Vorrichtung zum Bespiken von Reffentaufstreifen mit Spikes (1), mit nicht-zylindrischen entlang einer Längsachse länglich bzw. oval ausgeführten Fußteilen (2), welche Vorrichtung eine Spikepistole (6) aufweist, in welche die Spikes (1), Fußteile (2) voran, mittels eines angesetzten Schlauches, Rohres (9) oder dergleichen gelangen,
**dadurch gekennzeichnet,**
**dass** eine Einrichtung (7,7') zur übereinstimmenden Ausrichtung der Fußteile (2) der Spikes (1) vorgesehen ist, in welche die Spikes (1) mit zufälliger Orientierung der Längsachse ihrer Fußteile (2) eintreten und aus dieser bezüglich der Längsachse ihrer Fußteile (2) übereinstimmend orientiert unmittelbar in den Schlauch, das Rohr (9) oder dergleichen eintreten, welcher bzw. welches, ebenso wie die Transportwege der Spikes (1) in der Spikepistole (6), einen gemäß dem Fußteil (2) der Spikes (1) länglichen bzw. ovalen Querschnitt aufweist bzw. aufweisen.

2. Vorrichtung nach Anspruch 1, **dadurch gekennzeichnet, dass** die Spikes (1) in der Einrichtung (7, 7') Vibrationsbewegungen ausgesetzt sind, welche den Transport der Spikes (1) in der Einrichtung (7, 7') unterstützen oder bewirken.

3. Vorrichtung nach Anspruch 1 oder 2, **dadurch gekennzeichnet, dass** die Vibrationsbewegungen die Spikes (1) auch in die und / oder aus der Einrichtung (7, 7') transportieren.

4. Vorrichtung nach einem der Ansprüche 1 bis 3, **dadurch gekennzeichnet, dass** der Schlauch, das Rohr (9) oder dergleichen die Spikes (1) nach erfolgter Ausrichtung ansaugt.

5. Vorrichtung nach Anspruch 4, **dadurch gekennzeichnet, dass** der Schlauch, das Rohr (9) oder dergleichen in oder quer zur Transportrichtung der Spikes (1) angesetzt ist.

6. Vorrichtung nach einem der Ansprüche 1 bis 5, **dadurch gekennzeichnet, dass** die Einrichtung (7, 7') einem Vorratsbehälter (5) unmittelbar oder unter Zwischenschaltung einer schlauch- oder rohrartigen Zuführung (13) nachgeordnet ist, welcher Vorratsbehälter (5) insbesondere ein Vibrations-Feeder ist.

7. Vorrichtung nach einem der Ansprüche 1 bis 6, **dadurch gekennzeichnet, dass** die Einrichtung (7) die Spikes (1) unter kontrollierten Vibrationen transportiert und im Transportweg eine Vertiefung (10a) vorgesehen ist, deren seitliche Randbereiche Führungsleisten (10b) aufweist, an welchen sich die Spikes (1) mit ihren Fußteilen (2) hängen.

8. Vorrichtung nach Anspruch 7, **dadurch gekennzeichnet, dass** eine Rampe (10c) die ausgerichteten Spikes (1) von den Führungsleisten (10b) transportiert.

9. Vorrichtung nach einem der Ansprüche 1 bis 6, **dadurch gekennzeichnet, dass** die Einrichtung (7) die Spikes (1) unter kontrollierten Vibrationen transportiert und im Transportweg eine Führung (12) mit Führungsabsätzen (12a) vorgesehen ist, an welchen sich die Spikes (1) mit ihren Fußteilen (2) hängen, wobei der gegenseitige Abstand der Führungsabsätze (12a) über die Längserstreckung der Führung (12) derart geringer wird, dass die Vibrationsbewegungen während des Transportes der Spikes (1) entlang der Führung (12) eine Ausrichtung der Fußteile (2) der Spikes (1) bewirken.

10. Vorrichtung nach einem der Ansprüche 1 bis 6, **dadurch gekennzeichnet, dass** ein Schlauch, ein Rohr (13) oder dergleichen die Spikes (1), Fußteile (2) voran, der Einrichtung (7') in zufälliger Orientierung der Fußteile (2) zuführt.

11. Vorrichtung nach einem der Ansprüche 1 bis 6 oder 10, **dadurch gekennzeichnet, dass** die Einrichtung (7') einen Einlasskanal (15a, 18a, 24a, 33a) mit einem eine beliebige Orientierung der Fußteile (2) zulassenden Querschnitt und einen Auslasskanal (15b, 18b, 24b, 33b) mit einem den Fußteilen (2) angepassten Querschnitt aufweist.

12. Vorrichtung nach Anspruch 11, **dadurch gekennzeichnet, dass** der Einlasskanal (15a, 18a) mit dem Auslasskanal (15b, 18b) fluchtet.

13. Vorrichtung nach Anspruch 11 oder 12, **dadurch gekennzeichnet, dass** zwischen dem Einlasskanal (15a, 18a, 24a) und dem Auslasskanal (15b, 18b, 24b) zumindest ein rotierendes oder zumindest ein hin und her bewegbares Element vorgesehen ist, welches eine Durchtrittsöffnung für den Spikefuß (2) zur Verfügung stellt, die dem Querschnitt des Auslasskanales (15b, 18b, 24b) zumindest angenähert ist.

14. Vorrichtung nach Anspruch 11 oder 13, **dadurch gekennzeichnet, dass** Einlass- und Auslasskanal (24a, 24b) gegeneinander versetzt sind und ein Kolben (25) vorgesehen ist, welcher die Spikes (1) einzeln zur Eintrittsöffnung des Auslasskanals (24b) transportiert, vor welcher ein bewegliches, insbesondere rotierendes Element (27) die Spikes (1) ausrichtet.

15. Vorrichtung nach Anspruch 14, **dadurch gekennzeichnet, dass** das rotierende Element eine Scheibe (27) mit einer mittigen Öffnung ist, welche einen Durchtritt des Spikes (1) in den Auslasskanal (24b) gestattet.

16. Vorrichtung nach Anspruch 11, **dadurch gekennzeichnet, dass** die zugeführten Spikes (1) zwischen einem feststehenden zylindrischen Element (34) und einem dieses umgebenden rotierenden Element (35) ausgerichtet werden.

17. Vorrichtung nach Anspruch 10, **dadurch gekennzeichnet, dass** ein auf die Fußteile (2) seitlich wirkender Stempel (32) die zugeführten Spikes (1) ausrichtet.

18. Vorrichtung nach Anspruch 17, **dadurch gekennzeichnet, dass** der Stempel (32) die ausgerichteten Spikes (1) zu einer ihre Fußteile (2) erfassenden Führungsschiene (30) transportiert.

19. Vorrichtung nach einem der Ansprüche 1 bis 6, **dadurch gekennzeichnet, dass** die Einrichtung (7') einen seinen Querschnitt kontinuieriich ändernden Ausrichtungskanal (22) aufweist, dessen Eintrittsöffnung den Eintritt von Spikes (1) mit zufällig orientierten Fußteilen (2) gestattet und dessen Austrittsöffnung einen den Fußteilen (2) angepassten Querschnitt aufweist.

20. Vorrichtung nach Anspruch 19, **dadurch gekennzeichnet, dass** der Ausrichtungskanal (22) bogenförmig gekrümmt verläuft.

## Claims

1. Device for applying antiskid studs (1) to the tread of a tyre, having non-cylindrical foot parts (2) which are of elongate or oval design along a longitudinal axis, which device has an antiskid stud gun (6) into which the antiskid studs (1) are inserted with their foot part (2) at the front, by means of an attached hose, pipe (9) or the like, **characterized in that** an apparatus (7, 7') is provided for coordinated alignment of the foot parts (2) of the antiskid studs (1), into which apparatus (7, 7') the antiskid studs (1) are inserted with random orientation of the longitudinal axis of their foot parts (2) and they pass out of the apparatus and directly into the hose, the pipe (9) or the like after having been oriented so as to correspond with said foot parts (2) with respect to their longitudinal axis, which hose, pipe (9) or the like has/have, as do the transport paths of the antiskid studs (1) in the antiskid stud gun (6), an elongate or oval cross section according to the foot part (2) of the antiskid studs (1).

2. Device according to Claim 1, **characterized in that** in the apparatus (7, 7'), the antiskid studs (1) are subjected to vibration movements which assist or bring about the transportation of the antiskid studs (1) in the apparatus (7, 7').

3. Device according to Claim 1 or 2, **characterized in that** the vibration movements also transport the antiskid studs (1) into and/or out of the apparatus (7, 7').

4. Device according to one of Claims 1 to 3, **characterized in that** the hose, the pipe (9) or the like sucks in the antiskid studs (1) after orientation has taken place.

5. Device according to Claim 4, **characterized in that** the hose, the pipe (9) or the like is attached in or transversely to the direction of transportation of the antiskid studs (1).

6. Device according to one of Claims 1 to 5, **characterized in that** the apparatus (7, 7') is assigned downstream of a reservoir container (5), either immediately or with the intermediate connection of a tube-like or pipe-like feed means (13), which reservoir container (5) is in particular a vibration feeder.

7. Device according to one of Claims 1 to 6, **characterized in that** the apparatus (7) transports the antiskid studs (1) with controlled vibrations, and a depression (10a) is provided in the transportation path, the lateral edge areas of which depression (10a) have guide bars (10b) from which the antiskid studs (1) are suspended by their foot parts (2).

8. Device according to Claim 7, **characterized in that** a ramp (10c) transports the oriented antiskid studs (1) from the guide bars (10b).

9. Device according to one of Claims 1 to 6, **characterized in that** the apparatus (7) transports the antiskid studs (1) with controlled vibrations, and a guide means (12) with guide shoulders (12a) from which the antiskid studs (1) are suspended by their foot parts (2) is provided in the transportation path, wherein the distance between the guide shoulders (12a) is smaller over the longitudinal extent of the guide means (12) to such an extent that the vibration movements during the transportation of the antiskid studs (1) along the guide means (12) cause the foot parts (2) of the antiskid studs (1) to be oriented.

10. Device according to one of Claims 1 to 6, **characterized in that** a hose, a pipe (13) or the like feeds the antiskid studs (1), with foot parts (2) first, to the apparatus (7) with a random orientation of the foot parts (2).

11. Device according to one of Claims 1 to 6 or 10, **characterized in that** the apparatus (7') has an inlet duct (15a, 18a, 24a, 33a) with a cross section which permits any desired orientation of the foot parts (2), and an outlet duct (15b, 18b, 24b, 33b) with a cross section which is matched to the foot parts (2).

12. Device according to Claim 11, **characterized in that** the inlet duct (15a, 18a) is aligned with the outlet duct (15b, 18b).

13. Device according to Claim 11 or 12, **characterized in that** at least one rotating element or at least one element which moves to and fro is provided between the inlet duct (15a, 18a, 24a) and the outlet duct (15b, 18b, 24b), which element makes available a through-opening for the antiskid stud foot (2), which through-opening is at least approximated to the cross section of the outlet duct (15b, 18b, 24b).

14. Device according to Claim 11 or 13, **characterized in that** the inlet duct (24a) and outlet duct (24b) are offset with respect to one another, and a piston (25) is provided which transports the antiskid studs (1) individually to the inlet opening of the outlet duct (24b), before which inlet opening a movable, in particular rotating, element (27) orients the antiskid studs (1).

15. Device according to Claim 14, **characterized in that** the rotating element is a disc (27) with an opening in the centre, which opening permits the antiskid studs (1) to pass through into the outlet duct (24b).

16. Device according to Claim 11, **characterized in that** the antiskid studs (1) which are fed are oriented between a fixed, cylindrical element (34) and a rotating element (35) which surrounds the latter.

17. Device according to Claim 10, **characterized in that** a plunger (32) which acts laterally on the foot parts (2) orients the antiskid studs (1) which are fed.

18. Device according to Claim 17, **characterized in that** the plunger (32) transports the oriented antiskid studs to a guide rail (30) which senses their foot parts (2).

19. Device according to one of Claims 1 to 6, **characterized in that** the apparatus (7') has an outlet duct (22) which continuously changes its cross section and whose inlet opening permits antiskid studs (1) with randomly oriented foot parts (2) to enter, and whose outlet opening has a cross section which is matched to the foot parts (2).

20. Device according to Claim 19, **characterized in that** the orientation duct (22) extends with an arcuate curve.

## Revendications

1. Dispositif pour appliquer sur la bande de roulement d'un bandage de roue des clous antidérapants (1) qui présentent une pièce de pied (2) non cylindrique et allongée ou ovale dans la direction d'un axe longitudinal, lequel dispositif présente un pistolet (6) à clous antidérapants dans lequel les clous antidérapants (1) aboutissent avec la pièce de pied (2) en avant au moyen d'un tuyau flexible, d'un tube (9) ou similaires qui y est placé,
**caractérisé en ce que**
il présente un dispositif (7, 7') qui oriente en correspondance mutuelle les pièces de pied (2) des clous antidérapants (1) et dans lequel les clous antidérapants (1) entrent avec une orientation aléatoire de l'axe longitudinal de leur pièce de pied (2) et depuis lequel ils pénètrent directement dans le tuyau flexible, le tube (9) ou similaires en étant orientés en correspondance mutuelle suivant l'axe longitudinal de leur pièce de pied (2), lequel tuyau flexible, tube (9) ou similaires présentent de même que les parcours de transport des clous antidérapants (1) dans le pistolet (6) à clous antidérapants une section transversale allongée ou ovale adaptée à la pièce de pied (2) des clous antidérapants (1).

2. Dispositif selon la revendication 1, **caractérisé en ce que** dans le dispositif (7, 7'), les clous antidérapants (1) sont exposés à des déplacements de vibration qui soutiennent ou ont pour effet le transport des clous antidérapants (1) dans le dispositif (7, 7').

3. Dispositif selon les revendications 1 ou 2, **caractérisé en ce que** les déplacements de vibration transportent également les clous antidérapants (1) dans le dispositif (7, 7') ou hors de ce dernier.

4. Dispositif selon l'une des revendications 1 à 3, **caractérisé en ce que** le tuyau flexible, le tube (9) ou similaires aspirent les clous antidérapants (1) après qu'ils ont été alignés.

5. Dispositif selon la revendication 4, **caractérisé en ce que** le tuyau flexible, le tube (9) ou similaires sont disposés dans la direction de transport des clous antidérapants (1) ou transversalement par rapport à celle-ci.

6. Dispositif selon l'une des revendications 1 à 5, **caractérisé en ce que** le dispositif (7, 7') est disposé en aval d'un récipient de réserve (5), directement ou après interposition d'une amenée (13) en forme de tuyau flexible ou de tube, lequel récipient de réserve (5) est en particulier un dispositif d'alimentation vibrant.

7. Dispositif selon l'une des revendications 1 à 6, **caractérisé en ce que** le dispositif (7) transporte les clous antidérapants (1) par des vibrations contrôlées et **en ce qu'**un creux (10a) dont les bordures latérales présentent des lattes de guidage (10b) sur lesquelles les clous antidérapants (1) sont suspendus par leur pièce de pied (2) est prévu dans le dispositif de transport.

8. Dispositif selon la revendication 7, **caractérisé en ce qu'**une rampe (10c) transporte les clous antidérapants (1) alignés par les lattes de guidage (10b).

9. Dispositif selon l'une des revendications 1 à 6, **caractérisé en ce que** le dispositif (7) transporte les clous antidérapants (1) par des vibrations contrôlées et **en ce qu'**un guide (12) doté d'appendices de guidage (12a) sur lesquels les clous antidérapants (1) sont suspendus par leur pièce de pied (2) est prévu dans le parcours de transport, la distance mutuelle entre les appendices de guidage (12a) sur toute l'extension longitudinale du guide (12) étant réduite de telle sorte que les déplacements de vibration au cours du transport des clous antidérapants (1) le long du guide (12) ont pour effet un alignement des pièces de pied (2) des clous antidérapants (1).

10. Dispositif selon l'une des revendications 1 à 6, **caractérisé en ce qu'**un tuyau flexible, un tube (13) ou similaires amène au dispositif (7') les clous antidérapants (1) avec les pièces de pied (2) en avant, les pièces de pied (2) étant orientées aléatoirement.

11. Dispositif selon l'une des revendications 1 à 6 ou la revendication 10, **caractérisé en ce que** le dispositif (7') présente un canal d'admission (15a, 18a, 24a, 33a) dont la section transversale permet une orientation quelconque des pièces de pied (2) et un canal de sortie (15b, 18b, 24b, 33b) dont la section transversale est adaptée aux pièces de pied (2).

12. Dispositif selon la revendication 11, **caractérisé en ce que** le canal d'admission (15a, 18a) est aligné sur le canal de sortie (15b, 18b).

13. Dispositif selon les revendications 11 ou 12, **caractérisé en ce qu'**au moins un élément rotatif ou au moins apte à se déplacer en va-et-vient, qui offre une ouverture de passage au pied (2) des clous antidérapants et dont la section transversale est au moins proche de celle du canal de sortie (15b, 18b, 24b) est prévu entre le canal d'admission (15a, 18a, 24a) et le canal de sortie (15b, 18b, 24b).

14. Dispositif selon les revendications 11 ou 13, **caractérisé en ce que** le canal d'admission et le canal de sortie (24a, 24b) sont décalés mutuellement et **en ce qu'**un piston (25) qui transporte un à un les clous antidérapants (1) vers l'ouverture d'entrée du canal de sortie (24b) et en amont duquel un élément (27) mobile et en particulier rotatif aligne les clous antidérapants (1) est prévu.

15. Dispositif selon la revendication 14, **caractérisé en ce que** l'élément rotatif est un disque (27) doté d'une ouverture centrale qui permet le passage des clous antidérapants (1) dans le canal de sortie (24b).

16. Dispositif selon la revendication 11, **caractérisé en ce que** les clous antidérapants (1) amenés sont alignés entre un élément cylindrique fixe (34) et un élément rotatif (35) qui entoure ce dernier.

17. Dispositif selon la revendication 10, **caractérisé en ce qu'**un poussoir (32) qui agit latéralement sur les pièces de pied (2) aligne les clous antidérapants (1) qui sont amenés.

18. Dispositif selon la revendication 17, **caractérisé en ce que** le poussoir (32) transporte les clous antidérapants (1) alignés vers un rail de guidage (30) qui saisit leur pièce de pied (2).

19. Dispositif selon l'une des revendications 1 à 6, **caractérisé en ce que** le dispositif (7') présente un canal d'alignement (22) dont la section transversale se modifie progressivement, dont l'ouverture d'entrée permet l'entrée de clous antidérapants (1) dont la pièce de pied (2) est orientée aléatoirement et dont l'ouverture de sortie présente une section transversale adaptée aux pièces de pied (2).

20. Dispositif selon la revendication 19, **caractérisé en ce que** le canal d'alignement (22) est cintré en arc de cercle.
